# FASCICULE DE BREVET EUROPEEN

(11) **EP 3 046 784 B1**
(45) Date de publication et mention de la délivrance du brevet: **22.04.2020**
(21) Numéro de dépôt: 14758375.1
(22) Date de dépôt: 29.08.2014
(51) Int. Cl.: B60H 1/00

(54) **DISPOSITIF DE CONDITIONNEMENT D'AIR POUR VÉHICULE AUTOMOBILE À DOUBLE FLUX ET RÉPARTITEUR DE FROID**
KLIMATISIERUNGSVORRICHTUNG FÜR EIN KRAFTFAHRZEUG MIT DUALEM STROM UND KÄLTEVERTEILER
AIR CONDITIONING DEVICE FOR A MOTOR VEHICLE WITH DUAL STREAM AND DISTRIBUTOR OF COLD

(30) Priorité: 19.09.2013 FR 1358993
(43) Date de publication de la demande: 27.07.2016
(73) Titulaire: Valeo Systemes Thermiques, 78320 Le Mesnil Saint Denis (FR)
(72) Inventeur: LOUP, Didier, F-78310 Maurepas (FR); MARTINELL, Amanda, F-78640 Neauphle Le Chateau (FR); AILLOUD, Fabrice, F-78280 Guyancourt (FR)
(74) Mandataire: Tran, Chi-Hai
(86) Numéro de dépôt international: PCT/EP2014/068442
(87) Numéro de publication internationale: WO 2015/039857

(56) Documents cités:
- EP-A2- 2 011 675
- WO-A1-2004/039615
- DE-A1- 19 954 571
- DE-A1-102012 004 655

## Description

L'invention concerne un dispositif de conditionnement d'air de véhicule automobile comportant des moyens pour chauffer, ventiler et rafraîchir l'air de l'habitacle, afin notamment de réguler la température dans l'habitacle et de désembuer ses vitres.

### ARRIERE PLAN DE L'INVENTION

Un tel dispositif est généralement implanté entre les sièges avant et le tableau de bord du véhicule qu'il équipe. Il comporte un carter délimitant une enceinte interne ayant plusieurs entrées d'air et plusieurs sorties d'air, cette enceinte renfermant un évaporateur pour refroidir l'air et un radiateur pour le réchauffer.

Différents systèmes de volets et autres obturateurs ajustables sont également prévus pour régler les débits d'air dans l'évaporateur, dans le radiateur et dans les entrées et sorties d'air, de manière à réguler la température de l'air traité.

Un tel dispositif est avantageusement du type à double flux d'air : un flux d'air dit supérieur entre et sort par des entrées et sorties situées dans une portion supérieure de l'enceinte, et un flux d'air dit inférieur entre et sort par des entrées et sorties situées dans une portion inférieure de l'enceinte.

Deux systèmes de soufflerie distincts forcent la circulation des flux supérieur et inférieur de manière indépendante, pour que le flux supérieur traverse la portion supérieure de l'évaporateur et du radiateur, et pour que le flux inférieur traverse les portions inférieures de ces éléments.

Le flux supérieur permet par exemple de réguler la température dans la portion supérieure de l'habitacle et de désembuer les vitres du véhicule, alors que le flux inférieur permet par exemple de réguler la température dans la portion inférieure de l'habitacle.

Dans un tel système, le flux supérieur traverse la moitié supérieure des échangeurs thermiques que constituent le radiateur et l'évaporateur, et le flux inférieur traverse la moitié inférieure de ces échangeurs. Cette situation est pénalisante lorsque l'un des flux est désactivé : la puissance thermique du flux restant est alors limitée à la moitié de la puissance thermique pouvant être fournie par les échangeurs. Le document DE 199 54 571, qui est considéré comme l'art antérieur le plus proche, divulgue un dispositif de conditionnement d'air d'un type connu.

### OBJET DE L'INVENTION

Le but de l'invention est de proposer une solution pour remédier à l'inconvénient mentionné çi-dessus.

### RESUME DE L'INVENTION

A cet effet, l'invention a pour objet un dispositif de conditionnement d'air de véhicule automobile, comportant une enceinte renfermant un échangeur thermique de type évaporateur ou radiateur, destiné à être traversé parallèlement par un premier flux d'air et par un deuxième flux d'air, ce dispositif comportant en amont de l'échangeur un répartiteur pour ajuster les tailles des sections de passage respectives du premier flux d'air et du deuxième flux d'air à travers l'échangeur, ce répartiteur comportant une conduite intégrant plusieurs canalisations distinctes parallèles et débouchant conjointement dans une face de l'échangeur thermique destinée à être traversée par le premier flux et par le deuxième flux, et un volet de répartition monté en amont des entrées des canalisations de cette conduite et en aval des voies d'amenée du premier flux et du deuxième flux pour que l'orientation de ce volet détermine le nombre de canalisations véhiculant le premier flux vers l'échangeur et le nombre de canalisations véhiculant le deuxième flux vers l'échangeur, le volet de répartition se situant en aval d'une ventilation correspondante pour le premier flux et le deuxième flux.

Lorsque le volet est incliné, l'aire de la section de l'échangeur traversée par l'un des flux est significativement plus importante que l'aire de la section de l'échangeur traversée par l'autre flux. L'invention permet ainsi d'ajuster la répartition de la puissance thermique apportée au premier flux et au deuxième flux dont les débits peuvent être pilotés par des moyens additionnels distincts.

L'invention concerne également un dispositif tel que défini ci-dessus, dans lequel le volet est mobile entre deux positions extrêmes correspondant respectivement à la fermeture de la voie d'amenée du premier flux d'air et à la fermeture de la voie d'amenée du deuxième flux d'air.

L'invention concerne également un dispositif tel que défini ci-dessus, dans lequel le volet de répartition a une forme de paroi à contour rectangulaire montée rotative autour d'un axe coïncidant avec un côté du contour rectangulaire, et dans lequel l'axe de rotation du volet est situé à mi-distance entre la voie d'amenée du premier flux et la voie d'amenée du deuxième flux.

L'invention concerne également un dispositif tel que défini ci-dessus, dans lequel la conduite comporte quatre canalisations.

L'invention concerne également un dispositif tel que défini ci-dessus, dans lequel le répartiteur est monté en amont d'un évaporateur.

L'invention concerne également un dispositif tel que défini ci-dessus, dans lequel le dispositif est situé en aval de la

### BREVE DESCRIPTION DES FIGURES

La figure 1 est une vue latérale en coupe du dispositif de conditionnement d'air selon l'invention ;
La figure 2 est une vue schématique de la conduite du dispositif selon l'invention dans une configuration de répartition identique pour les flux supérieur et inférieur ;
La figure 3 est une vue schématique du divergeant du dispositif selon l'invention dans une configuration de fonctionnement en simple flux supérieur ;
La figure 4 est une vue schématique du divergeant du dispositif selon l'invention dans une configuration de répartition favorisant le flux supérieur ;
La figure 5 est une vue schématique du divergeant du dispositif selon l'invention selon une configuration de répartition favorisant le flux inférieur ;
La figure 6 est une vue schématique du divergeant du dispositif selon l'invention selon une configuration de fonctionnement en simple flux inférieur.

### DESCRIPTION DETAILLEE DE L'INVENTION

L'idée à la base de l'invention est de prévoir un volet orientable en aval des deux flux d'air et à l'entrée d'une conduite à plusieurs canalisations qui débouche dans l'échangeur thermique, pour que l'orientation du volet conditionne le nombre de canalisations véhiculant le premier flux vers l'échangeur et le nombre de canalisations véhiculant le deuxième flux vers l'échangeur.

Dans l'exemple ci-après, l'invention est mise en œuvre dans un dispositif de conditionnement d'air à double flux comportant un premier flux qui est un flux inférieur et un deuxième flux qui est un flux supérieur.

Le dispositif de conditionnement 1 selon l'invention qui est représenté dans les figures comporte un carter 2 délimitant une enceinte interne qui renferme un évaporateur 3 pour rafraîchir l'air et un radiateur 4 pour le réchauffer.

Ce carter comporte en amont de l'évaporateur 3, une conduite 5 comportant quatre canalisations internes 5A, 5B, 5C et 5D contiguës s'étendant parallèlement les unes aux autres et débouchant dans la face amont de l'évaporateur 3 pour conjointement couvrir l'ensemble de cette face amont afin d'alimenter l'ensemble de cet évaporateur 3 en air à rafraîchir.

Le flux d'air inférieur est apporté par une voie d'amenée inférieure 6 située en amont de la conduite 5, en vis-à-vis de ses deux canalisations inférieures 5A et 5B. L'air du flux inférieur admis par l'entrée 6 est véhiculé par des canalisations de la conduite 5 vers l'évaporateur 3 et le radiateur 4 pour les traverser avant d'être refoulé par une sortie inférieure 7 de l'enceinte 2, sa circulation étant forcée par une ventilation non représentée.

La circulation du flux supérieur est forcée par une autre ventilation non représentée, qui alimente en air une voie d'amenée supérieure 9 située en amont de la conduite 5 en vis-à-vis de ses deux autres canalisations, à savoir les canalisations supérieures 5C et 5D. Ce flux supérieur apporté par l'amenée 9 est véhiculé par des canalisations de la conduite 5 vers l'évaporateur 3 et le radiateur 4 pour les traverser avant d'atteindre une cavité haute du carter repérée par 11.

Le radiateur 4 ainsi que l'évaporateur 3 sont l'un et l'autre parallélépipédiques, et ils s'étendent à peu près verticalement l'un devant l'autre lorsque le dispositif est en place, le radiateur étant l'élément qui est le plus en avant par rapport au sens d'avancement du véhicule. Les flux d'air supérieur et inférieur suivent des trajectoires horizontales lorsqu'ils traversent successivement ces éléments. La cavité haute 11 comporte trois sorties supérieures 12, 13 et 14, de sorte que l'air du flux supérieur introduit dans la cavité haute 11 est refoulé par ces sorties 12, 13, 14.

Comme visible dans les figures, la conduite 5 s'étend transversalement par rapport à la direction des flux traversant successivement l'évaporateur 3 et le radiateur 4. Elle a une forme approximativement parallélépipédique, l'une de ses deux plus grandes faces étant directement ouverte sur la face amont de l'évaporateur 3. L'une de ses deux plus petites faces correspond à l'admission de cette conduite 5 dans laquelle débouchent la voie d'amenée inférieure 6 et la voie d'amenée supérieure 9 contiguës, et cette admission constitue aussi une zone de répartition du flux inférieur et du flux supérieur.

Les canalisations 5A à 5D sont délimitées par des cloisons internes 17 planes, parallèles, et régulièrement espacées pour délimiter quatre sections transversales rectangulaires contiguës et de mêmes dimensions. Chaque canalisation est ouverte sur toute sa longueur vers la face amont de l'évaporateur 3.

La voie d'amenée inférieure 6 est située en vis-à-vis des entrées des canalisations inférieures 5A et 5B de la conduite 5, et la voie d'amenée supérieure 9 est située en vis-à-vis des entrées des canalisations supérieures 5C et 5D. Un volet répartiteur 18 est monté entre les voies 6 et 9 et les entrées des canalisations 5A à 5D, de telle manière que l'orientation de ce volet 18 conditionne le nombre de canalisations dans lesquelles est introduit le flux inférieur et le nombre de canalisations dans lesquelles est introduit le flux supérieur.

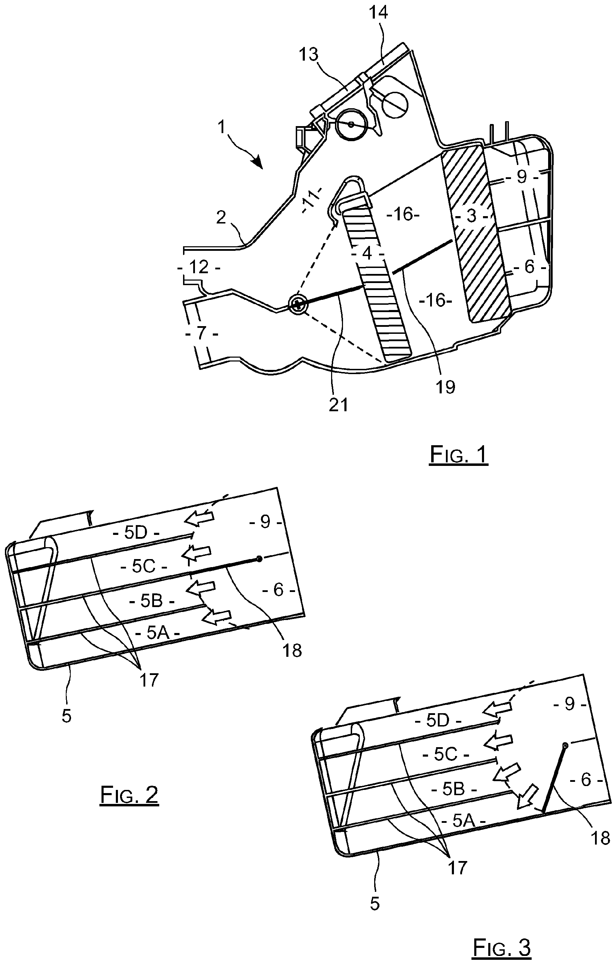

Ce volet a une forme générale de paroi à contour rectangulaire, qui s'étend dans le prolongement de la cloison interne 17 centrale, à savoir la cloison interne qui sépare les canalisations 5B et 5C, lorsque ce volet a une inclinaison nulle, c'est-à-dire lorsqu'il occupe sa position médiane comme dans la figure 2.

Dans cette situation où le volet répartiteur est en position médiane, l'air admis par la voie inférieure 6 est véhiculé par les canalisations 5A et 5B, de sorte qu'il traverse la portion inférieure de l'évaporateur 3 et du radiateur 4, avant d'être évacué par la sortie inférieure 7. Et l'air admis par la voie supérieure 9 circule dans les canalisations 5C et 5D pour traverser la portion supérieure de l'évaporateur 3 et du radiateur 4 avant de passer dans la cavité haute pour être refoulé par les sorties supérieures.

Complémentairement, comme visible dans la figure 1, le dispositif est équipé d'une paroi 19 de séparation de la région intermédiaire 16 en une portion supérieure et une portion supérieure, et d'un volet de sortie 21 situé en aval du radiateur 4.

Dans la configuration des figures 1 et 2, la paroi 19 et le volet de sortie 21 occupent leurs positions médianes respectives, tout comme le volet de répartition 18, de sorte que le flux inférieur et le flux supérieur ont le même débit et traversent des sections de l'évaporateur 3 ayant les mêmes aires. Ils traversent également des sections du radiateur 4 qui ont les mêmes aires.

Le volet de répartition 18 qui a une forme de paroi rectangulaire est monté rotatif autour d'un axe correspondant à l'un des côtés de son contour, et qui correspond à son bord fixe. Cet axe de rotation s'étend parallèlement à la cloison centrale 17 que le volet 18 prolonge lorsqu'il occupe sa position médiane en étant espacé de l'extrémité amont de cette cloison d'une distance correspondant à la largeur du volet.

Dans ces conditions, le bord mobile du volet 18 placé en position médiane est jointif du bord amont de la cloison 17 centrale. Le volet de répartition 18 se situe en aval de la ventilation correspondante pour le flux inférieur et supérieur. Les bords amonts des deux autres cloisons sont aussi situés à une distance de l'axe de rotation du volet correspondant à la largeur du volet. Ce volet peut ainsi occuper deux autres positions dans lesquelles sont bord mobile est jointif du bord amont de chacune de ces deux autres cloisons 17.

Par ailleurs, la largeur de ce volet de répartition 18 correspond sensiblement à la hauteur de la voie inférieure 6 et à la hauteur de la voie supérieure 9, de sorte qu'il peut occuper deux positions extrêmes dans lesquelles il ferme ces voies.

Dans le cas où le flux inférieur est arrêté, en éteignant par exemple la ventilation correspondante, le volet 18 est abaissé au maximum pour fermer la voie inférieure 6, comme dans la figure 3. Tout l'air admis par la voie supérieure 9 est alors conduit vers le radiateur par les quatre canalisations 5A à 5D, ce qui permet au flux supérieur de bénéficier de toute la puissance thermique de l'évaporateur 3 et du radiateur 4.

Dans une situation intermédiaire, le flux inférieur est réduit en diminuant par exemple la puissance électrique d'alimentation de la ventilation forçant ce flux inférieur, et le volet de répartition 18 est abaissé pour occuper une position où son bord mobile prolonge la cloison 17 inférieure qui sépare les canalisations 5A et 5B.

Dans ce cas, le flux inférieur est conduit uniquement par la canalisation 5A et le flux supérieur qui présente un débit plus important est conduit par les trois canalisations 5B à 5D vers l'évaporateur 3. De manière correspondante, la cloison mobile 19 et le volet de sortie 21 occupent alors des positions correspondant à celles du volet de répartition, en étant partiellement abaissés par rapport à leurs positions médianes respectives.

Comme on le comprend, dans cette configuration, le flux inférieur traverse un quart de la section de l'évaporateur 3 et le flux supérieur traverse les trois quarts de cette section.

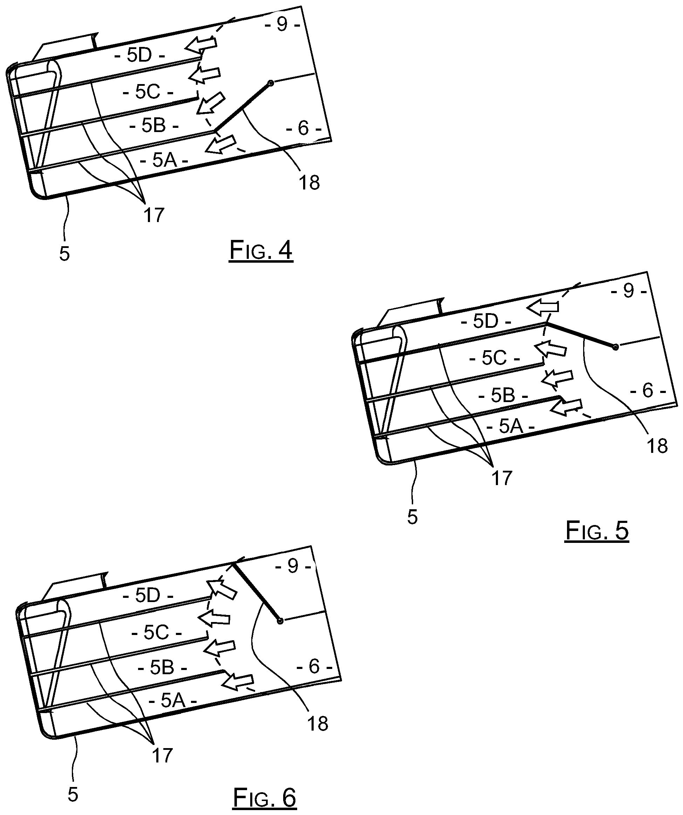

Le volet répartiteur 18 peut aussi occuper, à l'inverse, une inclinaison dans laquelle son bord mobile est situé au niveau de la cloison 17 séparant les canalisations 5C et 5D pour la prolonger, comme dans la figure 5. Ceci correspond à une situation dans laquelle le flux inférieur est conduit par les trois canalisations 5A à 5C alors que le flux supérieur est conduit uniquement par la canalisation 5D vers l'échangeur 3.

Là aussi, la cloison mobile 19 et le volet de sortie 21 occupent des positions correspondant à celle du volet 18 en étant placés au dessus de leurs positions médianes respectives. D'une manière générale, la cloison 19 mobile peut être remplacée par trois cloisons parallèles fixes de manière à séparer la région intermédiaire 16 en quatre canalisations parallèles distinctes de façon analogue aux cloisons internes de la conduite 5.

A l'extrême, le volet 18 occupe une position complètement relevée, comme dans la figure 6, pour fermer la voie supérieure 9 afin que le flux inférieur soit véhiculé par les quatre canalisations 5A à 5D, ce qui correspond à une situation dans laquelle le flux supérieur est éteint, et le flux inférieur bénéficie de la totalité de la puissance thermique de l'évaporateur 3 et du radiateur 4 en traversant toute la section de cet élément.

## Revendications

1. Dispositif (1) de conditionnement d'air de véhicule automobile, comportant une enceinte (2) renfermant un échangeur thermique (3, 4) de type évaporateur (3) ou radiateur (4), destiné à être traversé parallèlement par un premier flux d'air et par un deuxième flux d'air, ce dispositif comportant en amont de l'échangeur (3, 4) un répartiteur pour ajuster les tailles des sections de passage respectives du premier flux d'air et du deuxième flux d'air à travers l'échangeur (3, 4), ce répartiteur comportant une conduite (5) intégrant plusieurs canalisations (5A-5D) distinctes parallèles et débouchant conjointement dans une face de l'échangeur thermique (3, 4) destinée à être traversée par le premier flux et par le deuxième flux, et un volet de répartition (18) monté en amont des entrées des canalisations (5A-5D) de cette conduite et en aval des voies d'amenée du premier flux et du deuxième flux pour que l'orientation de ce volet (18) détermine le nombre de canalisations véhiculant le premier flux vers l'échangeur (3, 4) et le nombre de canalisations véhiculant le deuxième flux vers l'échangeur (3, 4), **caractérisé en ce que** le volet de répartition (18) se situe en aval d'une ventilation correspondante pour le premier flux et deuxième flux.

2. Dispositif selon la revendication 1, dans lequel le volet (18) est mobile entre deux positions extrêmes correspondant respectivement à la fermeture de la voie d'amenée du premier flux d'air et à la fermeture de la voie d'amenée du deuxième flux d'air.

3. Dispositif selon la revendication 1 ou 2, dans lequel le volet de répartition (18) a une forme de paroi à contour rectangulaire montée rotative autour d'un axe coïncidant avec un côté du contour rectangulaire, et dans lequel l'axe de rotation du volet est situé à mi-distance entre la voie d'amenée du premier flux et la voie d'amenée du deuxième flux.

4. Dispositif selon l'une des revendications 1 à 3, dans lequel la conduite comporte quatre canalisations (5A-5D).

5. Dispositif selon l'une des revendications 1 à 3, dans lequel le répartiteur est monté en amont d'un évaporateur (3).

## Patentansprüche

1. Klimatisierungsvorrichtung (1) für ein Kraftfahrzeug, umfassend ein Gehäuse (2), das einen Wärmetauscher (3, 4) vom Verdampfertyp (3) oder Kühlertyp (4) einschließt, der von einem ersten Luftstrom und von einem zweiten Luftstrom parallel durchquert werden soll, wobei diese Vorrichtung stromaufwärts des Austauschers (3, 4) einen Verteiler zum Einstellen der Größen der jeweiligen Strömungsquerschnitte des ersten Luftstroms und des zweiten Luftstroms durch den Austauscher (3, 4) umfasst, wobei dieser Verteiler eine Leitung (5), die mehrere getrennte parallele Kanäle (5A-5D) enthält, die gemeinsam in einer Fläche des Wärmetauschers (3, 4) münden, die von dem ersten Strom und von dem zweiten Strom durchquert werden soll, und eine Verteilungsklappe (18) umfasst, die stromaufwärts der Einlässe der Kanäle (5A-5D) dieser Leitung und stromabwärts der Zuführungswege des ersten Stroms und des zweiten Stroms angebracht ist, damit die Ausrichtung dieser Klappe (18) die Anzahl von Kanälen, die den ersten Strom zu dem Austauscher (3, 4) befördern, und die Anzahl von Kanälen, die den zweiten Strom zu dem Austauscher (3, 4) befördern, bestimmt, **dadurch gekennzeichnet, dass** sich die Verteilungsklappe (18) stromabwärts einer entsprechenden Lüftung für den ersten Strom und den zweiten Strom befindet.

2. Vorrichtung nach Anspruch 1, wobei die Klappe (18) zwischen zwei Endpositionen beweglich ist, die dem Schließen des Zuführungsweges des ersten Luftstroms bzw. dem Schließen des Zuführungsweges des zweiten Luftstroms entsprechen.

3. Vorrichtung nach Anspruch 1 oder 2, wobei die Verteilungsklappe (18) die Form einer Wand mit einer rechtwinkligen Kontur annimmt, die drehbar um eine Achse angebracht ist, welche mit einer Seite der rechtwinkligen Kontur zusammenfällt, und wobei sich die Drehachse der Klappe in der Mitte zwischen dem Zuführungsweg des ersten Stroms und dem Zuführungsweg des zweiten Stroms befindet.

4. Vorrichtung nach einem der Ansprüche 1 bis 3, wobei die Leitung vier Kanäle (5A-5D) umfasst.

5. Vorrichtung nach einem der Ansprüche 1 bis 3, wobei der Verteiler stromaufwärts eines Verdampfers (3) angebracht ist.

## Claims

1. Motor vehicle air conditioning device (1), including an enclosure (2) enclosing a heat exchanger (3, 4) of evaporator type (3) or radiator type (4), intended to have pass through it in parallel a first air stream and a second air stream, this device including on the upstream side of the exchanger (3, 4) a distributor for adjusting the sizes of the respective flow sections of the first air stream and the second air stream through the exchanger (3, 4), this distributor including a duct (5) incorporating a plurality of distinct parallel channels (5A-5D) conjointly opening into a face of the heat exchanger (3, 4) intended to have the first stream and the second stream pass through it, and a distribution flap (18) mounted on the upstream side of the inlets of the channels (5A-5D) of this duct and on the downstream side of the feed paths of the first stream and the second stream so that the orientation of this flap (18) determines the number of channels conveying the first stream toward the exchanger (3, 4) and the number of channels conveying the second stream toward the exchanger (3, 4), **characterized in that** the distribution flap (18) is situated on the downstream side of a corresponding fan for the first stream and the second stream.

2. Device according to Claim 1, wherein the flap (18) is mobile between two extreme positions respectively corresponding to the closure of the feed path of the first air stream and to the closure of the feed path of the second air stream.

3. Device according to Claim 1 or 2, wherein the distribution flap (18) takes the form of a wall with a rectangular contour mounted to rotate about an axis coinciding with one side of the rectangular contour and wherein the rotation axis of the flap is situated halfway between the feed path of the first stream and the feed path of the second stream.

4. Device according to any one of Claims 1 to 3, wherein the duct includes four channels (5A-5D).

5. Device according to any one of Claims 1 to 3, wherein the distributor is mounted on the upstream side of an evaporator (3).
